# EUROPÄISCHE PATENTSCHRIFT

(11) **EP 1 604 776 B1**
(45) Veröffentlichungstag und Bekanntmachung des Hinweises auf die Patenterteilung: **06.09.2006**
(21) Anmeldenummer: 05012506.1
(22) Anmeldetag: 10.06.2005
(51) Int. Cl.: B23Q 7/02, B65G 47/84

(54) **Werkzeugmaschine mit Vertikalspindeln**
Machine tool with vertical spindles
Machine-outil avec arbres verticales

(30) Priorität: 11.06.2004 DE 102004029916
(43) Veröffentlichungstag der Anmeldung: 14.12.2005
(73) Patentinhaber: Scherer Feinbau GmbH, 63776 Mömbris (DE)
(72) Erfinder: Scherer, Frank, 63776 Dörnsteinbach (DE)
(74) Vertreter: Pöhner, Wilfried Anton, Dr.

(56) Entgegenhaltungen:
- DE-B- 1 028 411
- DE-C1- 4 322 918
- FR-A- 2 775 270
- US-B1- 6 276 245
- PATENT ABSTRACTS OF JAPAN Bd. 008, Nr. 108 (M-297), 19. Mai 1984 (1984-05-19) & JP 59 019649 A (MIYANO TEKKOSHO:KK), 1. Februar 1984 (1984-02-01)

## Beschreibung

Die Erfindung betrifft eine Werkzeugmaschine, insbesondere Drehmaschine mit einer oder mehreren Arbeitsstationen mit jeweils einer vertikal ausgerichteten Spindel (Vertikalspindel), die zur Aufnahme des Werkstücks am Ort der Andienung (Aufnahmepunkt), Bewegung des Werkstücks bis zur Arbeitsstation und zur Ablage des Werkstücks nach der Bearbeitung am Ort des Weitertransports (Ablagepunkt) bewegbar ist, sowie mit einem Transportband zum An- und zum Weitertransport der Werkstücke, einem Computer zur Steuerung der Arbeitsstationen und/oder zur Steuerung der Aufnahme, der Bewegung und der Ablage der Werkstücke.

Zur Steigerung der Produktivität erfolgt das Andienen der Werkstücke an die Arbeitsstationen von Werkzeug- und Drehmaschinen häufig durch endlos umlaufende Transportbänder. Der Einsatz von Transportbändern hat sich insbesondere im Zusammenhang mit Werkzeugmaschinen, deren Arbeitsspindeln in vertikaler Richtung orientiert sind, bewährt. Die Werkstücke werden in ebenfalls vertikaler Ausrichtung angedient.

Aus dem Stand der Technik sind Werkzeugmaschinen mit Vertikalspindeln bekannt. In DE 432 291 8 C1 ist eine Werkzeugmaschine für wellenförmige Werkstücke beschrieben, die einen an der Vorsatzspindel der Motorspindel koaxial befestigten Reitstock aufweist. Der an der Vorsatzspindel koaxial angeflanschte Reitstock macht alle Bewegungen der in z- und x-Richtung bewegbaren Spindel mit, wobei die Beweglichkeit des Reitstocks in Richtung einer y- und einer z-Achse ebenfalls vorgesehen ist. Aufgrund der Befestigung unterstützt der Reitstock die automatisierte Be- und Entladung. Die Steuerung des Reitstocks ist mit in die Maschinensteuerung für die Motorspindel einbezogen.

Zum Andienen der Werkstücke ist auch der Einsatz eines Greifarmes der als Industrieroboter ausgestattet sein kann, bekannt. Nach Abschfuss der Bearbeitung werden die Werkstücke erneut unter Einsatz des Greifarms von der Arbeitsstation entnommen und zum Abtransport auf das Transportband abgelegt. Nachteiligerweise ist diese Lösung zur Beschickung einer mit Vertikalspindeln arbeitenden Maschine aufgrund der zusätzlich erforderlichen Programmierung und der anspruchsvollen Mechanik aufwendig und störanfällig.

Denn diese Systeme sind eine getrennte Einheit mit einem getrennten Grundgestell, getrennten Antrieben und einer getrennten Steuerung. Deshalb entstehen Aufwendungen für die mechanische-, elektrische-, elektronische- und informationstechnologische Integration dieser Systeme in die Werkzeugmaschine.

Die Aufgabe der Erfindung besteht vor diesem Hintergrund in der Konstruktion einer unaufwendigen, wenig störanfälligen und wartungsarmen Vorrichtung, welche die Werkstücke vom Transportband zur Arbeitsstation transportiert und die Werkstücke nach der Bearbeitung wieder zum Transportband zurückführt. Dabei soll die zusätzliche Transportvorrichtung von der Steuerung der Werkzeugmaschine auf Werkstücke unterschiedlicher Abmessungen einfach und rasch umstellbar sein.

Die Lösung der Aufgabe besteht in der Konstruktion einer Werkzeugmaschine, die dadurch gekennzeichnet ist, dass
- eine drehbar gelagerte Scheibe (Drehscheibe) mit randständigen Aussparungen zur Aufnahme der Werkstücke im Aktionsradius der bewegbaren Vertikalspindeln positioniert ist, wobei
- die Aussparungen im Randbereich der Drehscheibe das Transportband ganz oder teilweise überlappen, und
- an den Aussparungen oder im Bereich der Drehscheibe Mittel zur zeitweisen Fixierung der Werkstücke vorgesehen sind, und
- die Drehscheibe zur Steuerung des Transports der Werkstücke vom Transportband zum Aufnahmepunkt und vom Ablagepunkt zurück zum Transportband numerisch gesteuert erfolgt.

Es versteht sich von selbst, dass die Werkstücke während ihrer Bearbeitung in den Bearbeitungsstationen entweder nur von der Vertikalspindel fixiert werden, oder dass auf der gegenüberliegenden Seite zur zusätzlichen Fixierung und Stabilisierung jeweils ein Reitstock vorgesehen sein kann. Der Reitstock kann feststehend oder beweglich befestigt sein. Denkbar ist auch, dass der Reitstock koaxial an der beweglichen Vertikalspindel oder einer ihrer Bestandteile befestigt ist. Die Werkzeugmaschine soll für sämtliche Arbeitstechniken, wie z.B. Drehen, Fräsen, Bohren und Schleifen einsetzbar sein.

Der Kerngedanke der Erfindung besteht darin, dass die Drehscheibe bei vergleichsweise einfachem mechanischem Aufbau die Werkstücke, nach Berechnung des von der Konfiguration der Bestandteile der Werkzeugmaschine und von den Ausmaßen der Werkstücke abhängenden Rotationswinkels bis zum Aufnahmepunkt der Vertikalspindel befördert. Die Steuerung der Drehscheibe kann durch die CNC-Steuerung der Werkzeugmaschine oder durch einen mit der CNC-Steuerung vernetzten Computer erfolgen. Die rotierende Drehscheibe ist im Vergleich zum Greifarm eines Industrieroboters einfach zu steuern und ist zudem vergleichsweise wartungsarm. Der entscheidende Vorteil besteht in der einfachsten Anpassung an Werkstücke unterschiedlicher Abmessungen durch Programmierung bzw. Änderung des Rotationswinkels der Drehscheibe.

In einer Weiterbildung der Erfindung ist vorgesehen, dass jede zu einer Arbeitsstation gehörende Vertikalspindeln in vertikaler Richtung und mindestens einer horizontal ausgerichteten Orientierung bewegbar ist. Im einfachsten Falle bewegt sich die Vertikalspindel in horizontaler Richtung parallel zum Transportband, welche die Werkstücke bis zur Drehscheibe transportiert. Durch Drehung der Drehscheibe Wird das Werkstück vom Transportband näher zur Arbeitsstation, d.h. zum Aufnahmepunkt, bewegt, um von dort aus von der in vertikaler Richtung bewegbare Spindel aufgenommen und in horizontaler Richtung vollends bis zur Arbeitsstation transportiert zu werden. Natürlich ist denkbar, dass die zur Werkzeugmaschine gehörenden Vertikalspindeln in alle drei Raumrichtungen bewegbar sind.

Die Drehscheibe muss zwischen den beweglichen Vertikalspindeln und den die Werkstücke andienenden Transportbändern so positioniert sein, dass der Punkt an dem die Werkstücke von der Drehscheibe durch die Spindeln aufgenommen werden, auf einer der vertikalen Verschiebachsen und auf einer der horizontal ausgerichteten Verschiebeachsen der Vertikalspindel liegen muss. Das gleiche gilt für den Ablagepunkt, falls die Spindel das Werkstück nach der Bearbeitung in einer anderen als der ursprünglichen Aussparung in der Drehscheibe ablegt oder sich der Ablagepunkt in derselben Aussparung aufgrund durch die Bearbeitung erfolgenden Änderungen der Außenabmessungen des Werkstückes verändert. Ist die Werkzeugmaschine mit zwei Arbeitsstationen und einer zwischen den Arbeitsstationen positionierten Drehscheibe ausgerüstet, so gilt dies für die Bewegbarkeit der Vertikalspindeln beider Arbeitsstationen.

In einer besonderen Ausführungsform der erfindungsgemäßen Werkzeugmaschine ist vorgesehen, dass die zur Aufnahme der Werkstücke vorgesehenen Aussparungen in der Drehscheibe in ihrer Form und Größe variieren. Bei Werkstücken mit zylindrischer Außenform bietet sich eine konische Verjüngung der Aussparungen an, weil dadurch die Position der Werkstücke in den Aussparungen in Abhängigkeit von ihrem Außendurchmesser eindeutig festgelegt ist. Die eindeutige Festlegung der Position ist eine wichtige Voraussetzung für die Durchführbarkeit der computergesteuerten Aufnahme der Werkstücke durch die Vertikalspindel.

Neben sich konisch verjüngenden Öffnungen oder mit einer kreisrunden Wölbung abschließenden Öffnungen sind prinzipiell auch Aussparungen mit Dreiecksform oder irgendeiner anderen Form denkbar. Denkbar ist insbesondere die Anbringung von Aussparungen, die in ihrer Größe alternieren, so dass beispielsweise ein Werkstück, dessen Außendurchmesser aufgrund der Bearbeitung abgenommen hat, nach der Bearbeitung in einer weniger geräumig dimensionierten Aussparung oder in einer Aussparung anderer Art abgelegt wird. Um die Drehbewegung der Drehscheibe möglichst gering zu halten, sind die geringer dimensionierten Aussparungen auf der Drehscheibe jeweils in unmittelbarer Nähe zu den größer dimensionierten Aussparungen angebracht. Bezüglich der Größe und Form der Aussparungen ergibt sich so eine alternierende Anordnung.

Die Veränderung der Werkstücke durch die Bearbeitung wird dadurch berücksichtigt, dass die Ausnehmungen in der Drehscheibe zur Aufnahme der Werkstücke unterschiedlich groß sein können.

Bei hohlzylindrischen Werkstücken ist alternativ denkbar, dass auf der Drehscheibe Halterungsstifte angebracht sind, deren Außendurchmesser etwas geringer bemessen ist als der Innendurchmesser der hohlzylindrischen Werkstücke. Bei der Ansteuerung der Vertikalspiridel zur Entnahme und/oder Wiederablage der Werkstücke ist in diesem Fall zu berücksichtigen, dass sich die Bewegungsstrecke der Vertikalspindel um die Höhe der Drehscheibe verringert.

Die exakte Positionierung der Werkstücke in den Aussparungen der Drehscheibe kann dadurch verbessert werden, dass an der Drehscheibe in den Bereichen, in denen das Werkstück anliegen soll, E-lektrorpagneten installiert sind. Die Aktivierung der Elektromagneten wird durch einen auf der Drehscheibe oder im Bereich der Drehscheibe installierten Sensor, der jedes herannahende Werkstück erkennt, oder durch einen Computer, in dessen Speichereinheit der exakte Abstand der Werkstücke auf dem Transportband eingeschrieben ist, aktiviert. Nach Bewegung des Werkstücks durch die Drehscheibe bis zum Aufnahmepunkt werden die Elektromagneten durch eine Computersteuerung, die auch die Bewegung der Vertikalspindel steuert, deaktiviert. Das gleiche gilt für die erneute Aktivierung der Elektromagneten, nach dem die bearbeiteten Werkstücke wieder in die entsprechende passende Aussparung in der Drehscheibe abgelegt werden.

Zur mechanischen Fixierung der Werkstücke in der Aussparungen kann aber ein rundgeformter Bügel dienen, der im Randbereich der Drehscheibe zumindest abschnittsweise ortsfest angebracht ist und die Werkstücke in den Aussparungen der Drehscheibe zurückhält.

Es ist vorgesehen, dass die Rotation der Drehscheibe durch Festlegung des Drehwinkels, in Abhängigkeit von der Ausdehnung des Werkstücks, steuerbar ist. Die Steuerung erfolgt durch einen Computer in dessen Steuerprogramm die Außenmaße des Werkstücks vor und nach der Bearbeitung eingeschrieben sind. In diesem Punkt zeigen sich einer der Vorteile der Drehscheibe im Vergleich zum Greifarm. Während für die Steuerung des Greifarms oder eines Industrieroboters eine Vielzahl von Freiheitsgraden zu berücksichtigen ist, kann sich die Steuerung der Drehscheibe im wesentlichen auf die Festlegung des Drehwinkels beschränken. Dabei ist vorgesehen, dass die Rotation der Drehscheibe und/oder die Bewegung des Transportbandes durch einen zur CNC-Steuerung gehörenden Computer oder einen nur mit der CNC-Steuerung vernetzten unabhängigen Computer steuerbar ist.

Es liegt im Rahmen der Erfindung, dass die Bewegung des Transportbandes zum Andienen der Werkstücke bis zur Aufnahme in den Aussparungen der Drehscheibe in Abhängigkeit von der Bewegung der Drehscheibe erfolgt. Da sich die Drehscheibe in Abhängigkeit von der Bearbeitung der einzelnen Werkstücke intermittierend bewegt, erfolgt in der Regel auch die Bewegung des Transportbandes mit Unterbrechungen.

Natürlich ist denkbar, dass die Drehscheibe im Zusammenhang mit einer Werkzeugmaschine nutzbar ist, die nur eine Arbeitsstation aufweist. Besonders vorteilhaft ist die Nutzung der Drehscheibe aber bei einer Werkzeugmaschine mit zwei Arbeitsstationen, wobei die Drehscheibe zwischen den beiden Arbeitsstationen positioniert ist und der Aktionsradius beider Spindeln bis in den Randbereich der Drehscheibe reicht. Falls die beiden zu einer Werkzeugmaschine gehörenden Arbeitsstationen aufeinander aufbauende Bearbeitungsschritte durchführen, ergibt sich der Vorteil, dass die zwischen den Arbeitsstationen liegende Transportstrecke minimal ist, und mit technisch sehr geringem Aufwand gesteuert wird.

Erfolgen die an den beiden Bearbeitungsstationen vorgesehenen Bearbeitungsschritte an den gegenüberliegenden Enden des Werkstücks, so ist denkbar, dass das Werkstück nach Wiederablage in der Drehscheibe durch einen Greifarm gedreht wird, bevor es durch die Vertikalspindel der zweiten Arbeitsstation erneut aus der Aussparung in der Drehscheibe entnommen wird. Der erforderliche Greifarm muss für diesen Arbeitsschritt um mindestens 180° drehbar und mindestens in vertikaler Richtung beweglich sein. Natürlich ist denkbar, dass die Wiederablage des Werkstücks nach dessen Manipulation durch den Greifarm in einem anderen Aussparungstyp oder an auf der Oberseite der Drehscheibe befestigten Halterungsstiften erfolgt. Die Ablage des Werkstücks nach der ersten Bearbeitung in einem anderen Aussparungstyp kann erforderlich sein, wenn die beiden Enden des Werkstücks unterschiedliche Maße und/oder geometrische Formen aufweisen.

Eine weitere vorteilhafte Ausbildung ist eine Werkzeugmaschine mit einer Drehscheibe, welche nicht in Form eines vollständigen Kreises, sondern in Form eines Kreis-Sektors ausgebildet ist, sowie die Kombination einer erfindungsgemäßen Werkzeugmaschine mit einem externen, rotierenden Greifarm oder einem externen, linearen bewegten Handlingsystem.

Eine voll ausgebildete Scheibe als Werkstücktransportsystem bewegt grundsätzliche alle ihre Aussparungen gleichzeitig. Für Fälle, bei denen ein Werkstück in einer Arbeitsstation, einer Wendestation oder einer Messstation während eines Transportzyklus noch weiter bearbeitet werden muss, ist es erforderlich, diese Arbeitsstationen durch eine weitere Achse aus dem Flugkreis der Drehscheibe herauszubewegen.

Wenn die Drehscheibe auf einen Kreis-Sektor reduziert wird, können Arbeitsstationen über eine längere Zeit im Flugkreis dieser reduzierten Drehscheibe verbleiben. Dadurch ist es möglich, mehrere Arbeitsstationen nacheinander zu beschicken oder zu entleeren. Die Bautiefe einer solchen Werkzeugmaschine kann unter den Durchmesser des Flugkreisradius der kreissektorförmigen Drehscheibe reduziert werden, weil diese nicht ständig alle Bereiche ihres Flugkreises abdeckt. Eine derart konfigurierte Drehscheibe gewinnt die Vorzüge eines universell einsetzbaren Greifarmes in Verbindung mit dem Vorzug, dass für ihre Steuerung die bereits vorhandene NC-Steuerung der Werkzeugmaschine eingesetzt werden kann, und dass für die Versorgung ihres Servomotors das Versorgungsmodul der Werkzeugmaschine mit genutzt werden kann und auch das Grundgestell der Werkzeugmaschine ebenfalls als Träger dient. Die Koordination mit den Bewegungen der anderen NC-gesteuerten Bearbeitungsstationen ist durch die Bündelung in einer einzigen Steuerung im Vergleich zu einem externen Greifer sehr stark vereinfacht.

Für Anwendungsfälle, bei denen die Werkstücke nicht in einer Linie auf einem Transportband eintreffen, sondern auf der Fläche einer Werkstückaufnahme verteilt sind, z. B. einem KLT (Kleinlastträger) ist es eine sinnvolle Kombination, einen externen Greifarm oder ein externes lineares Handlingsystem der erfindungsgemäßen Werkzeugmaschine zuzuordnen. Wenn dieses Handlingsystem der Drehscheibe derart zugeordnet wird, dass die kreisförmige Arbeitslinie der seitlichen Aussparung die gesamte Breite der Werkstückaufnahme auf einem externen, rotierenden Greifarm oder einem externen, linearen bewegten Handlingsystem abdeckt, sind mit nur einer einzigen, zusätzlichen Achse alle Werkstücke auf der Werkstückaufnahme für die Drehscheibe erreichbar und können in die Werkzeugmaschine eingefahren werden.

Es ist vorgesehen, dass die zur Werkzeugmaschine gehörenden Bestandteile, insbesondere die Arbeitsstationen mit den Vertikalspindeln auf einem zusammenhängenden Grundgestell montiert sind. Dadurch wird vorteilhafterweise erreicht, dass beide Vertikalspindeln sowie die dazwischen positionierte Drehscheibe in der gleichen horizontalen Ebene liegen. Zur verbesserten Manipulation der Werkzeugmaschine ist vorgesehen, dass das Grundgestell Öffnungen zur Aufnahme der Greifarme eines Gabelstaplers aufweist. Nach dem Absetzen der Maschine am Bestimmungsort sind keine Montage- und Justierarbeiten erfoderlich und die Maschine ist sofort einsatzbereit. Die Standfestigkeit der Maschine wird erhöht, wenn das Gewicht des Grundgestells im Vergleich zum Gewicht der anderen Maschinenbestandteile hoch ist. Aus diesem Grund ist vorgesehen, dass das Grundgestell der Maschine in einer besonderen Ausführungsform aus Gußstahl besteht.

Im Folgenden sollen weitere Einzelheiten und Merkmale der Erfindung anhand eines Beispiels näher erläutert werden. Das Abbildungsbeispiel soll die Erfindung jedoch nicht einschränken, sondern nur erläutern. Es zeigen in schematischer Darstellung:
- **Figur 1**: Werkzeugmaschine aus der Aufsicht
- **Figur 2**: Werkzeugmaschine aus der Seitenansicht
- **Figur 3**: Kreissektorförmige Drehscheibe zusammen mit rotierendem, externem Greifarm
- **Figur 4**: Kreissektorförmige Drehscheibe zusammen mit externem, linear bewegtem Handlingsystem

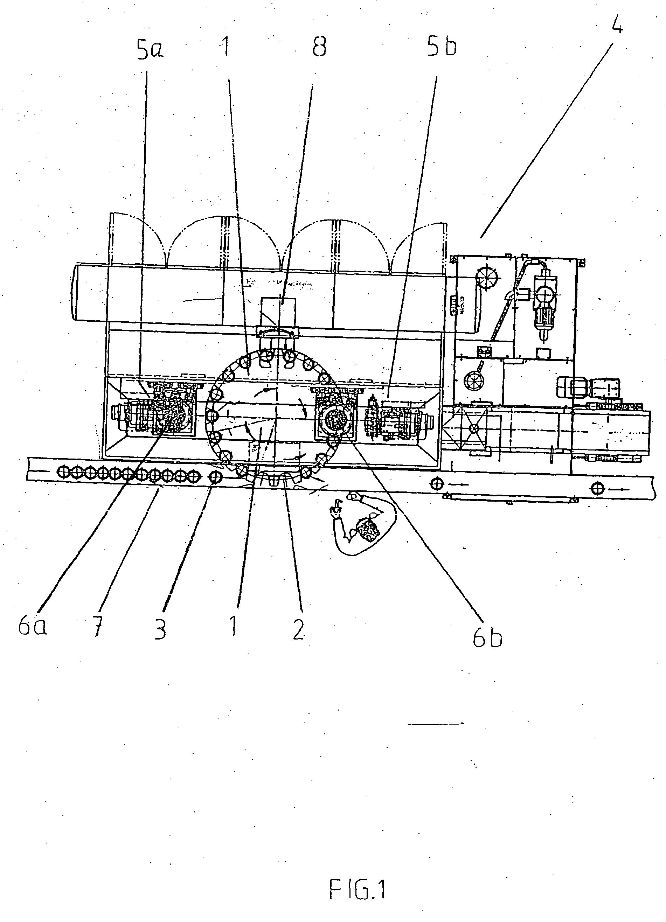

Figur 1 zeigt bei einer Werkzeugmaschine 4 mit zwei Arbeitsstationen 5a, 5b wie die auf dem Transportband 7 angedienten Werkstücke 3 von den Aussparungen 2 in der Drehscheibe 1 aufgenommen werden. Die Drehscheibe 1 ist zwischen den beiden Arbeitsstationen 6a und 6b positioniert. Die Arbeitsstationen 5a und 5b sind jeweils mit Vertikalspindeln 6a und 6b ausgerüstet. Der Aktionsradius der bewegbaren Vertikalspindeln reicht zumindest bis in den Randbereich der Drehscheibe 1. Die zur Arbeitsstation (5b) gehörende bewegbare Vertikalspindel 6b ist in Figur 1 gerade oberhalb der Drehscheibe 1 positioniert. Zu der Werkzeugmaschine gehört außerdem eine Wendestation 8, welche die Werkstücke nach der Bearbeitung an der Arbeitsstation 5a jeweils aus den Aussparungen heraushebt und vor der Wiederablage um 180° wendet. Nachdem die Werkstücke 3 durch die Wendestation 8 gedreht wurden, können die Werkstücke 3 durch die zur Arbeitsstation 5b gehörende Vertikalspindel 6b entnommen werden, so dass das gegenüberliegende Ende des Werkstücks 3 in der Arbeitsstation 5b bearbeitet werden kann.

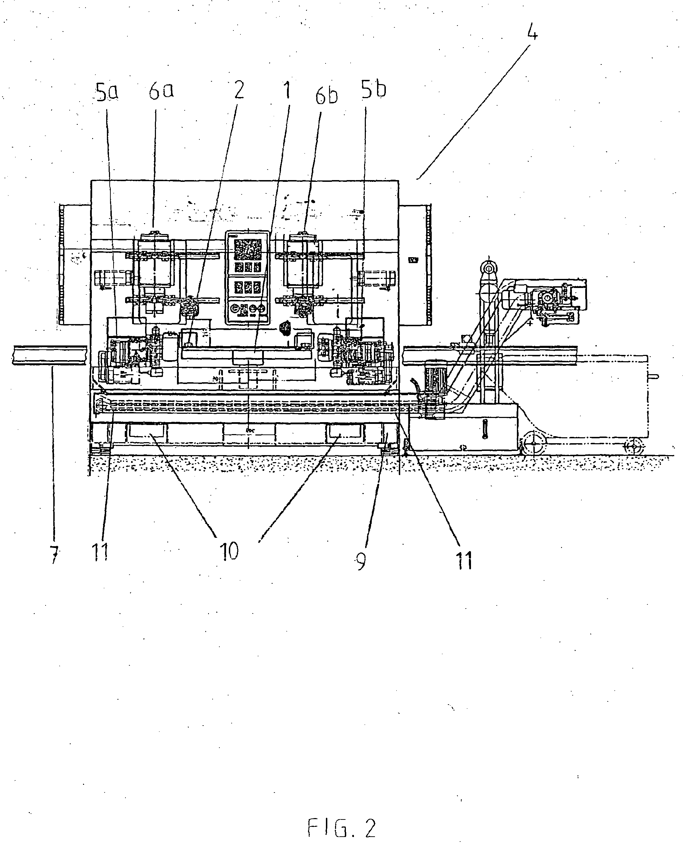

Figur 2 zeigt die in Figur 1 beschriebene Werkzeugmaschine 4 aus der Seitenansicht. Deutlich zu erkennen ist, dass die zur Arbeitsstation 5b gehörende und bewegbare Vertikalspindel 6b im gezeigten Zustand oberhalb der Drehscheibe 1 positioniert ist. Die zur Arbeitsstation 5a gehörende Vertikalspindel 6a ist im Moment der Abbildung oberhalb dem zur Arbeitsstation 5a gehörenden Reitstock positioniert. Deutlich zu erkennen ist außerdem, dass die beiden zur Werkzeugmaschine 4 gehörenden Arbeitsstationen 5a und 5b auf einem einheitlichen Grundgestell 9 befestigt sind. Zum erleichterten Transport der Werkzeugmaschine 4 weist das Grundgestell 9 Öffnungen 10 auf, die zur Aufnahme der Greifarme eines Gabelstaplers vorgesehen sind.

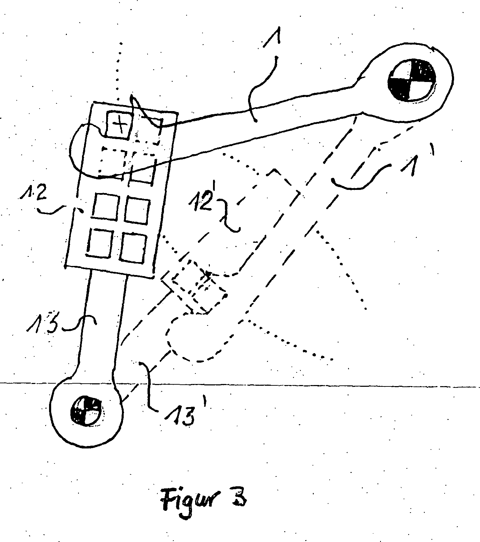

Figur 3 gibt die kreisförmige Arbeitslinie einer kreissektorförmigen Drehscheibe 1 wieder. Die erfindungsgemäße Drehscheibe 1 wird in zwei Winkelpositionen dargestellt, in der oberen Winkelposition erreicht sie ein auf der Werkstückaufnahme 12 eines externen, rotierenden Greifarmes 13 ganz außen positioniertes Werkstück, in der anderen Winkelposition erreicht sie das ganz innen positionierte Werkstück. Dadurch wird plausibel, dass mit zwei rotierenden Achsen alle Punkte auf der Ebene der Werkstückaufnahme erreichbar sind.

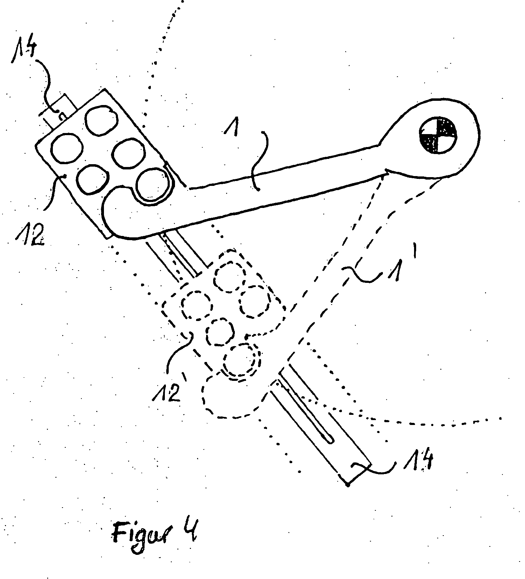

Nach ähnlichem Prinzip ist in Figur 4 die Kombination einer erfindungsgemäßen, kreissektorförmigen Drehscheibe 1 mit einem externen, linear bewegten Handlingsystem 14 abgebildet. Auch hier sind diejenigen Positionen eingezeichnet, in denen die kreissektorförmige Drehscheibe 1 die jeweils am weitesten außen stehenden Werkstücke der Werkstückaufnahme erreicht.

### Bezugszeichenliste

- 1.: Drehscheibe
- 2.: Aussparungen der Drehscheibe
- 3.: Werkstücke
- 4.: Werkzeugmaschine
- 5a: Arbeitsstation
- 5b.: Arbeitsstation
- 6a: Vertikalspindel
- 6b: Vertikalspindel
- 7.: Transportband
- 8.: Wendevorrichtung
- 9.: Grundgestell
- 10.: Öffnungen im Grundgestell für Staplertransport
- 11: Öffnung im Gestell für Spanförderer
- 12: Werkstückaufnahme auf externen Greifarm oder Handlingsystem
- 13: externer, rotierender Greifarm
- 14: externes, linear bewegtes Handlingsystem

## Patentansprüche

1. Werkzeugmaschine (4), insbesondere Drehmaschine, mit
- einer oder mehreren Arbeitsstationen (5a, 5b) mit jeweils einer vertikal ausgerichteten Spindel (Vertikalspindel) (6a, 6b), die zur
- Aufnahme des Werkstücks (3) zum Aufnahmepunkt, zur Bewegung des Werkstücks (3) bis zur Arbeitsstation (5a, 5b) und zur Ablage des Werkstücks (3) nach der Bearbeitung zum Ablagepunkt bewegbar ist, sowie mit
- einem Transportband (7) zum An- und zum Weitertransport der Werkstücke (3), und
- einem Computer zur Steuerung der Arbeits- und Bewegungsabläufe,
**dadurch gekennzeichnet, dass**
- eine drehbar gelagerte Scheibe (Drehscheibe) mit randständigen Aussparungen (2) zur Aufnahme der Werkstücke (3) im Aktionsradius der bewegbaren Vertikalspindeln (6a, 6b) positioniert ist, wobei
- die Aussparungen (2) im Randbereich der Drehscheibe (1) das Transportband (7) ganz oder teilweise überlappen, und
- an den Aussparungen (2) oder im Bereich der Drehscheibe Mittel zur zeitweisen Fixierung der Werkstücke (3) vorgesehen sind, und
- die Drehscheibe (1) zur Steuerung des Transports der Werkstücke (3) vom Transportband (7) zum Aufnahmepunkt und vom Ablagepunkt zurück zum Transportband (7) numerisch gesteuert erfolgt.

2. Werkzeugmaschine nach Anspruch 1, **dadurch gekennzeichnet, dass** die Vertikalspindeln (6a, 6b) in vertikaler und mindestens einer horizontalen Richtung bewegbar sind.

3. Werkzeugmaschine nach einem der Ansprüche 1 und 2, **dadurch gekennzeichnet, dass** die Drehscheibe (1) bei einer Werkzeugmaschine mit einer Arbeitsstation (5a) so positioniert ist, dass der Aufnahmepunkt und der Ablagepunkt der durch Rotation der Drehscheibe (1) transportierten Werkstücke (3) auf der vertikalen Verschiebeachse und auf den horizontal ausgerichteten Verschiebeachsen der Vertikalspindel (6a) liegt.

4. Werkzeugmaschine nach einem der Ansprüche 1 und 2, **dadurch gekennzeichnet, dass** die Drehscheibe (1) bei einer Werkzeugmaschine mit zwei Arbeitsstationen (5a, 5b) so positioniert ist, dass die Aufnahmepunkte und die Ablagepunkte der durch Rotation der Drehscheibe (1) transportierten Werkstücke (3) auf der vertikalen Verschiebeachse und den horizontal ausgerichteten Verschiebeachsen der Vertikalspindeln (6a, 6b) liegen.

5. Werkzeugmaschine nach einem der vorhergehenden Ansprüche, **dadurch gekennzeichnet, dass** die an der Drehscheibe (1) zur Aufnahme der Werkstücke (3) vorgesehenen Aussparungen (2) in Form und Größe einstellbar sind.

6. Werkzeugmaschine nach einem der vorhergehenden Ansprüche, **dadurch gekennzeichnet, dass** die an der Drehscheibe (1) zur Aufnahme der Werkstücke (3) vorgesehenen Aussparungen in der Größe variieren und die Größe zumindest eines Aussparungstyps (2) den durch die außenseitig spanabhebende Bearbeitung des Werkstücks (3) reduzierten Außenmaßen angepasst ist.

7. Werkzeugmaschine nach einem der vorhergehenden Ansprüche, **dadurch gekennzeichnet, dass** die an der Drehscheibe (1) zur Aufnahme der Werkstücke (3) vorgesehenen Aussparungen (2) durch adapterartig aufsteckbare Buchsen in Form und Größe veränderbar sind.

8. Werkzeugmaschine nach einem der vorhergehenden Ansprüche, **dadurch gekennzeichnet, dass** die Drehscheibe (1) zum Transport hohlzylindrischer Werkstücke (3) Halterungsstifte aufweist, deren zylindrische Außenseite im Durchmesser etwas geringer bemessen ist, als der Innendurchmesser der hohlzylindrischen Werkstücke (3).

9. Werkzeugmaschine nach einem der vorhergehenden Ansprüche, **dadurch gekennzeichnet, dass** an den zur Aufnahme der Werkstücke (3) vorgesehenen Aussparungen (2) der Drehscheibe (1) als Mittel zur Fixierung der Werkstücke (3) Elektromagneten vorgesehen sind, die sensorgesteuert und/oder computergesteuert aktivierbar und/oder deaktivierbar sind.

10. Werkzeugmaschine nach einem der vorhergehenden Ansprüche, **dadurch gekennzeichnet, dass** als Mittel zur Fixierung der Werkstücke (3) im Randbereich der Drehscheibe (1) zumindest abschnittsweise eine oder mehrere Führungsbügel vorgesehen sind.

11. Werkzeugmaschine nach einem der vorhergehenden Ansprüche, **dadurch gekennzeichnet, dass** die Rotation der Drehscheibe (1), durch Festlegung des Drehwinkels in Abhängigkeit von der Ausdehnung des Werkstücks (3) steuerbar ist, wobei die Außenmaße der Werkstücke (3) vor und/oder nach der Bearbeitung in das Steuerprogramm eines Computers eingeschrieben sind.

12. Werkzeugmaschine nach einem der vorhergehenden Ansprüche, **dadurch gekennzeichnet, dass** die Rotation der Drehscheibe (1) und/oder die Bewegung des Transportbandes (7) durch die CNC-Steuerung der Werkzeugmaschine (4) oder einen weiteren, mit der CNC-Steuerung vernetzten Computer steuerbar ist.

13. Werkzeugmaschine nach einem der vorhergehenden Ansprüche, **dadurch gekennzeichnet, dass** die Fördermenge des Transportbandes (7) zum Andienen der Werkstücke (3) in Abhängigkeit von der Bewegung der Drehscheibe (1) kontinuierlich oder intermittierend steuerbar ist.

14. Werkzeugmaschine nach einem der vorhergehenden Ansprüche, **dadurch gekennzeichnet, dass** die Werkzeugmaschine (4) zwei Arbeitsstationen (5a, 5b), welche die gleichen oder verschiedene, insbesondere aufeinander aufbauende, Bearbeitungsschritte ausführen, aufweist und die Drehscheibe (1) zwischen den beiden Arbeitsstationen (5a, 5b) angeordnet ist.

15. Werkzeugmaschine nach einem der vorhergehenden Ansprüche, **dadurch gekennzeichnet, dass** eine mit einer oder zwei Vertikalspindeln (6a, 6b) ausgestattete Werkzeugmaschine (4) eine Vorrichtung (8) zur Entnahme, Drehung und Wiederablage der nach der Bearbeitung an der ersten Arbeitsstation (5a) in der Drehscheibe (1) lagernden Werkstücke (3) aufweist, wobei die Werkstücke in einer Aussparung (2) gleichen oder anderen Typs äblegbar ist.

16. Werkzeugmaschine nach einem der vorhergehenden Ansprüche, **dadurch gekennzeichnet, dass** die Drehscheibe (1) als KreisSektor geformt ist, welcher eine oder mehrere Aussparungen (2) aufweist.

17. Werkzeugmaschine nach einem der vorhergehenden Ansprüche, **dadurch gekennzeichnet, dass** mit der (kreisförmigen) Arbeitslinie der Aussparungen (2) auf der Drehscheibe (1) die gesamte Breite einer Werkstückaufnahme (12) auf einem externen, rotierenden Greifarm (13) oder auf einem externen, linearbewegten Handlingsystem (14) oder auf einem anderen Roboter zuordenbar ist.

18. Werkzeugmaschine nach einem der vorhergehenden Ansprüche, **dadurch gekennzeichnet, dass** sämtliche zur einer Werkzeugmäschine gehörenden Arbeitsstationen (5a, 5b) auf einem zusammenhängenden Grundgestell (9) montiert sind.

19. Werkzeugmaschine nach einem der vorhergehenden Ansprüche, **dadurch gekennzeichnet, dass** im dem zusammenhängenden Grundgestells (9) Öffnungen (10) für die Aufnahme der Greifarme eines Gabelstaplers vorgesehen sind.

20. Werkzeugmaschine nach einem der vorhergehenden Ansprüche, **dadurch gekennzeichnet, dass** das Grundgestell (9) aus Gußstahl ist.

## Claims

1. Machine tool (4), in particular a lathe, comprising
- one or more work stations (5a, 5b), in each case comprising a vertically aligned spindle (vertical spindle) (6a, 6b), which is moveable
- to receive the workpiece (3) to the reception point, for movement of the workpiece (3) to the work station (5a, 5b) and for deposition of the workpiece (3) after machining at the deposition point, and comprising
- a conveyor belt (7) for delivering the workpieces (3) and conveying them further, and
- a computer for controlling the work and movement sequences, **characterised in that**
- a rotably mounted disk (rotary disk) having, at its edge, recesses (2) to receive the workpieces (3) is positioned in the action radius of the movable vertical spindles (6a, 6b),
- the recesses entirely or partly overlapping the conveyor belt (7) in the edge region of the rotary disk (1), and
- means are provided on the recesses (2) or in the region of the rotary disk for temporary fixing of the workpieces (3), and
- the rotary disk (1) for controlling the conveying of the workpieces (3) from the conveyor belt (7) to the reception point and from the deposition point back to the conveyor belt (7) is numerically control.

2. Machine tool according to claim 1, **characterised in that** the vertical spindles (6a, 6b) are movable in the vertical direction and at least one horizontal direction.

3. Machine tool according to one of claims 1 and 2, **characterised in that** the rotary disk (1) for a machine tool with one work station (5a) is positioned such that the reception point and the deposition point of the workpieces (3) conveyed by rotation of the rotary disk (1) lie on the vertical displacement axis and on the horizontally aligned displacement axes of the vertical spindles (6a).

4. Machine tool according to one of claim 1 and 2, **characterised in that** the rotary disk (1) for a machine tool with two work stations (5a, 5b) is positioned such that the reception points and the deposition points of the workpieces (3) conveyed by rotation of the rotary disk (1) lie on the vertical displacement axis and on the horizontally aligned displacement axes of the vertical spindles (6a, 6b).

5. Machine tool according to one of the preceding claims, **characterised in that** the recesses (2) provided on the rotary disk (1) to receive the workpieces (3) are adjustable regarding their shape and size.

6. Machine tool according to one of the preceding claims, **characterised in that** the recesses (2) provided on the rotary disk (1) to receive the workpieces (3) vary in size, and the size of at least one recess type (2) is adapted to the exterior dimensions, reduced by the external machining of the workpiece (3).

7. Machine tool according to one of the preceding claims, **characterised in that** the recesses (2) provided on the rotary disk (1) to receive the workpieces (3) can be modified in shape and size by means of adapter-like, plug-in-type sockets.

8. Machine tool according to one of the preceding claims, **characterised in that** the rotary disk (1) has, for conveying hollow cylindrical workpieces (3), mounting pins, the cylindrical outside of which is dimensioned somewhat smaller in diameter than the internal diameter of the hollow cylindrical workpieces (3).

9. Machine tool according to one of the preceding claims, **characterised in that**, as means for fixing the workpieces (3), electromagnets, which can be activated and/or deactivated by sensor control and/or computer control, are provided on the recesses (2) in the rotary disk (1) to receive the workpieces (3).

10. Machine tool according to one of the preceding claims, **characterised in that**, as means for fixing the workpieces (3), one or more guide straps are provided, at least in sections, in the edge region of the rotary disk (1).

11. Machine tool according to one of the preceding claims, **characterised in that** the rotation of the rotary disk (1) can be controlled by determining the rotational angle in dependence on the extension of the workpiece (3), the external dimensions of the workpieces (3) being written into the control program of a computer before and/or after machining.

12. Machine tool according to one of the preceding claims, **characterised in that** the rotation of the rotary disk (1) and/or the movement of the conveyor belt (7) can be controlled via the CNC control of the machine tool (4) or via another computer, which is networked by means of the CNC control.

13. Machine tool according to one of the preceding claims, **characterised in that** the delivery rate of the conveyor belt (7) for supplying the workpieces (3) can be continually or intermittently controlled in dependence on the movement of the rotary disk (1).

14. Machine tool according to one of the preceding claims, **characterised in that** machine tool has two work stations (5a, 5b), which execute the same or different machining steps, in particular one machining step being based on the other, and **in that** the rotary disk (1) is arranged between the two work stations (5a, 5b).

15. Machine tool according to one of the preceding claims, **characterised in that** a machine tool (4) equipped with one or two vertical spindles (6a, 6b) has a device (8) for removal, rotation and re-deposition of the workpieces (3), which rest in the rotary disk (1) after machining on the first work station (5a), it being possible to deposit the workpieces in a recess (2) of the same or a different type..

16. Machine tool according to one of the preceding claims, **characterised in that** the rotary disk (1) is shaped as a circular sector that has one or more recesses (2).

17. Machine tool according to one of the preceding claims, **characterised in that**, with the (circular) working line of the recesses (2) on the rotary disk (1), the entire width of a workpiece receptacle (12) can be assigned to an external, rotating gripper arm (13) or to an external linearly moving handling system (14) or to a different robot.

18. Machine tool according to one of the preceding claims, **characterised in that** all the work stations (5a, 5b) belonging to a machine tool are mounted on a coherent base frame (9)..

19. Machine tool according to one of the preceding claims, **characterised in that** openings (10) are provided in the coherent base frame (9) to receive the gripper arms of a fork-lift truck.

20. Substrate according to one of the preceding claims, **characterised in that** the base frame (9) is made of cast steel.

## Revendications

1. Machine-outil (4), en particulier tour, avec
• un ou plusieurs postes de travail (5a, 5b), ayant chacune une broche orientée verticalement (broche verticale) (6a, 6b)
• pouvant être déplacée pour réceptionner la pièce à usiner (3) au point de réception, pour déplacer la pièce à usiner (3) jusqu'au poste de travail (5a, 5b) et pour déposer la pièce à usiner (3) après traitement au point de déposition, ainsi
• qu'une bande transporteuse (7) pour amener et convoyer les pièces à usiner (3) et
• d'un ordinateur pour commander les processus de travail et de déplacement,
**caractérisée par le fait**
• **qu'**un disque pivotant amorti (disque rotatif) avec des réservations périphériques (2) pour réceptionner les pièces à usiner (3) est positionnée dans le rayon d'action des broches verticales mobiles (6a, 6b), sachant que
• les réservations (2) dépassent complètement ou partiellement la bande transporteuse (7) dans la zone du bord du disque rotatif (1), et
• **que** des moyens sont prévus aux réservations (2) ou dans la zone du disque rotatif pour fixer momentanément la pièce à usiner (3), et
• **que** le disque rotatif (1) pour commander le transport des pièces à usiner (3) depuis la bande transporteuse (7) vers le point de réception et du point de déposition vers la bande transporteuse est à commande numérique.

2. Machine-outil selon la revendication 1, **caractérisée par le fait que** les broches verticales (6a, 6b) peuvent être déplacées verticalement et dans une direction horizontale au moins.

3. Machine-outil selon une des revendications 1 et 2, **caractérisée par le fait que** le disque rotatif (1), dans le cas d'une machine-outil ayant un poste de travail, est positionné de façon à ce que le point de réception et le point de déposition des pièces à usiner (3) transportés par la rotation du disque rotatif (1) sur l'axe de déplacement vertical et dur les axes orienté horizontalement des broches verticales (6a).

4. Machine-outil selon une des revendications 1 et 2, **caractérisée par le fait que** le disque rotatif (1), dans le cas d'une des machines-outils ayant deux postes de travail (5a, 5b) est positionné de façon à ce que le point de réception et le point de déposition des pièces à usiner (3) transportés par la rotation du disque rotatif (1) sur l'axe de déplacement vertical et dur les axes orienté horizontalement des broches verticales (6a).

5. Machine-outil selon une des revendications précédentes, **caractérisée par le fait que** les réservations (2) prévues sur le disque rotatif (1) pour réceptionner les pièces à usiner (3) peuvent être réglées en forme et en taille.

6. Machine-outil selon une des revendications précédentes, **caractérisée par le fait que** les réservations prévues sur le disque rotatif (1) pour réceptionner les pièces à usiner varient en taille et que la taille d'au moins un type de réservation (2) est adaptée aux dimensions extérieures réduites par l'usinage extérieur de la pièce à usiner (3).

7. Machine-outil selon une des revendications précédentes, **caractérisée par le fait que** les réservations prévues sur le disque rotatif (1) pour réceptionner les pièces à usiner (3) peuvent être modifiées dans leur forme et dans leur taille par des prises enfichables ayant la forme d'adaptateurs.

8. Machine-outil selon une des revendications précédentes, **caractérisée par le fait que** le disque rotatif (1) pour le transport des pièces à usiner (3) ayant la forme d'un cylindre creux présente des tiges de support dont la face cylindrique extérieure ont un diamètre légèrement inférieur au diamètre intérieur des pièces à usiner (3) ayant la forme d'un cylindre creux.

9. Machine-outil selon une des revendications précédentes, **caractérisée par le fait que** des électroaimants sont prévue sur les réservations (2) du disque rotatif (1) prévues pour réceptionner les pièces à usiner (3) sont prévues comme moyens de fixer les pièces à usiner (3), lesquels sont commandés par capteur et/ou peuvent être activés ou désactivés par ordinateur.

10. Machine-outil selon une des revendications précédentes, **caractérisée par le fait qu'**un ou plusieurs étriers de guidage sont prévus, au moins par tronçon, en tant que moyen de fixer les pièces à usiner (3) dans la zone du bord du disque rotatif (1).

11. Machine-outil selon une des revendications précédentes, **caractérisée par le fait que** la rotation du disque rotatif (1) peut être contrôlée en fixant l'angle de rotation en fonction de la dilatation de la pièce à usiner (3), sachant que les dimensions extérieures de la pièce à usiner (3) sont inscrites avant et/ou après le traitement dans le programme de commande d'un ordinateur.

12. Machine-outil selon une des revendications précédentes, **caractérisée par le fait que** la rotation du disque rotatif (1) et/ou le déplacement de la bande transporteuse (7) peut être contrôlé par la commande numérique de la machine-outil (4) ou d'un autre ordinateur en réseau avec la commande numérique.

13. Machine-outil selon une des revendications précédentes, **caractérisée par le fait que** la quantité convoyée par la bande transporteuse (7) pour traiter la pièce à usiner (3) peut être contrôlée de façon continuer ou intermittente en fonction du déplacement du disque rotatif (1).

14. Machine-outil selon une des revendications précédentes, **caractérisée par le fait que** la machine-outil (4) présente deux postes de travail (5a, 5b) exécutant des étapes de traitement identiques ou différentes, notamment construisant les unes sur les autres et que le disque rotatif (1) entre les deux postes de travail (5a, 5b).

15. Machine-outil selon une des revendications précédentes, **caractérisée par le fait qu'**une machine-outil (4) équipée d'une ou deux broches verticales (6a, 6b) présente un dispositif (8) pour le prélèvement, la rotation et la redéposition des pièces à usines (3) stockées dans le disque rotatif (1) après traitement sur le premier poste de travail (5a), sachant que les pièces à usiner peuvent être déposées dans une réservation (2) d'un type identique ou différent.

16. Machine-outil selon une des revendications précédentes, **caractérisée par le fait que** le disque rotatif (1) a la forme d'un secteur cylindrique présentant une ou plusieurs réservations (2).

17. Machine-outil selon une des revendications précédentes, **caractérisée par le fait que** la largeur totale d'une réception de pièce à usiner (12) peut être attribuée, avec la ligne de travail circulaire des réservations (2) sur le disque rotatif (1), sur un bras de saisie (13) en rotation ou sur un système de traitement (14) externe déplacé de façon linéaire ou sur un autre robot.

18. Machine-outil selon une des revendications précédentes, **caractérisée par le fait que** l'ensemble des postes de travail (5a, 5b) appartenant à une machine-outil est monté sur un châssis de base (9) d'un seul tenant.

19. Machine-outil selon une des revendications précédentes, **caractérisée par le fait que** des ouvertures (10) sont prévues dans le châssis (9) d'un seul tenant pour la réception des bras de saisie d'un chariot élévateur.

20. Machine-outil selon une des revendications précédentes, **caractérisée par le fait que** le châssis de base est en fonte d'acier.
